# EUROPÄISCHE PATENTANMELDUNG

(11) **EP 3 471 510 A1**
(43) Veröffentlichungstag der Anmeldung: **17.04.2019**
(21) Anmeldenummer: 17195923.2
(22) Anmeldetag: 11.10.2017
(51) Int. Cl.: H05B 6/10, C21D 9/60

(54) **VORRICHTUNG ZUR INDUKTIVEN ERWÄRMUNG**

(71) Anmelder: Gottfried Wilhelm Leibniz Universität Hannover, 30167 Hannover (DE)
(72) Erfinder: Schülbe, Holger, 37290 Meissner (DE); Benstein, Sebastian, 31311 Dollbergen (DE)
(74) Vertreter: Gramm, Lins & Partner Patent- und Rechtsanwälte PartGmbB

(57) **Zusammenfassung**

Die Erfindung betrifft Vorrichtung (1) zur induktiven Erwärmung mit einer Induktionsspulenanordnung, die relativ zueinander bewegbare Leiterstäbe (14a-3a; 3b-4b; 4a-5a; 5b-6b; 6a-14b; 14c; 14d; 3e-3d; 4d-4e; 5d-5e; 14d) hat. Zwischen zwei Leiterstäben (14a-3a; 3b-4b; 4a-5a; 5b-6b; 6a-14b; 14c; 14d; 3e-3d; 4d-4e; 5d-5e; 14d) ist ein Schleifkontakt mit einem Gleitelement (12) angeordnet ist, das aus einem Verbundwerkstoff aus Metall und einem elektrisch leitfähigem Festschmierstoff gebildet.

## Beschreibung

Die Erfindung betrifft eine Vorrichtung zur induktiven Erwärmung mit einer Induktionsspulenanordnung, die relativ zueinander bewegbare Leiterstäbe hat.

Derartige Vorrichtungen werden beispielsweise zur induktiven Erwärmung für Flachgut mit einer Längsfeld- und/oder Querfelderwärmung eingesetzt. Bei der Längsfelderwärmung wird das zu erwärmende Blech von der Induktorspule vollständig umschlossen, sodass der magnetische Hauptfluss in Vorschubrichtung des Bleches gerichtet ist. Die induzierten Ströme schließen sich über den Werkzeugquerschnitt. Die sich einstellende Temperaturverteilung ist bei einer geeigneten Frequenz des Induktorstroms über der gesamten Bandbreite des Flachguts nahezu homogen.

Bei der Querfelderwärmung sind die Induktorspulen an den Oberflächen des zu erwärmenden Flachguts angeordnet. Auf diese Weise ist der magnetische Hauptfluss der Induktorspulen senkrecht zur Oberfläche des Flachguts gerichtet.

DE 103 12 623 B4 beschreibt eine Querfeld-Erwärmungsanlage mit relativ zueinander translatorisch bewegbaren Leiterstäben. Die Induktorabschnitte einer Induktorlage sind dabei quer zur Vorschubrichtung unabhängig voneinander verschiebbar.

Ein Problem ist hierbei die elektrische Verbindung der relativ zueinander verschiebbaren Leiterstäbe.

EP 0 667 731 B1 offenbart eine Heizanlage mit selektiv einstellbarem Transversalfluss. Die Leiterstäbe der Spulen sind J-förmig gebogen und gleiten an einer Abschirmplatte aufeinander.

EP 1 221 826 B1 offenbart eine Transversalfluss-Induktionsheizvorrichtung mit relativ zueinander bewegbaren Leiterstäben, die an ihren Stirnseiten mit einem flexiblen Kabel oder flexiblen Leiterstück miteinander verbunden sind.

Ausgehend hiervon war es Aufgabe der vorliegenden Erfindung, eine verbesserte Vorrichtung zur induktiven Erwärmung mit einer variablen Induktionsspulenanordnung zu schaffen.

Die Aufgabe wird mit der Vorrichtung mit den Merkmalen des Anspruchs 1 gelöst. Vorteilhafte Ausführungsformen sind in den Unteransprüchen beschrieben.

Es wird vorgeschlagen, dass zwischen zwei Leiterstäben ein Schleifkontakt mit einem Gleitelement angeordnet ist, das aus einem Verbundwerkstoff aus Metall und einem elektrisch leitfähigen Festschmierstoff (auch Trockenschmierstoff genannt) gebildet ist. Ein Paar von Leiterstäben sind dabei so gelagert, dass sich ein Leiterstab entlang der Erstreckungsrichtung des anderen Leiterstabs bewegen kann und dabei in elektrisch leitendem Kontakt zu dem Leiterstab steht. Die Leiterstäbe können dabei z.B. geradlinig zur Relativbewegung in transversaler Richtung oder gekrümmt zur Bewegung auf einer gekrümmten (Rotations-)bahn sein

Durch die Anordnung eines Gleitelementes zur Bildung eines Schleifkontaktes für ein Paar von relativ zueinander beweglichen Leiterstäben wird ein Verschweißen dieses aneinander gelagerten Paares von Leiterstäben bei hohem Stromfluss verhindert und eine reibungsarme Relativbeweglichkeit sichergestellt. Durch die Kombination eines Festschmierstoffs mit einem metallischen Werkstoff in einen Verbundwerkstoff werden die elektrischen Eigenschaften des Metallanteils des Verbundwerkstoffes mit den reibungsreduzierenden Eigenschaften eines Festschmierstoffs vorteilhaft miteinander kombiniert. Durch die Verwendung eines Festschmierstoffs wird sichergestellt, dass das zu erwärmende Gut nicht durch herabfallende flüssige Schmierstoffpartikel beeinträchtigt wird. Durch die Auswahl eines elektrisch leitfähigen Festschmierstoffs, wie bspw. Graphit, an Stelle eines isolierenden Festschmierstoffs, wie bspw. Talkum, wird sichergestellt, dass der Verbundwerkstoff einen möglichst geringen spezifischen elektrischen Widerstand hat, sodass der Übergangswiderstand zwischen den beiden Leiterstäben gering gehalten wird.

Vorteilhaft ist es, wenn der Festschmierstoff aus der Gruppe von Graphit, Molybdenum-diselenide (MoSe2), Niobium-diselenide (NbSe₂), Wolfram-diselenide (WSe₂), Molybdän(IV)-sulfid (MoS₂) oder Wolfram(IV)-sulfid (WS₂) ausgewählt ist. Besonders vorteilhaft ist die Nutzung eines Verbundwerkstoffs aus Metall-Graphit, wie beispielsweise aus Bronze-Graphit oder Kupfer-Graphit. Graphit hat einen sehr geringen spezifischen Widerstand im Bereich von etwa 0,25 bis 4 * 10³ - Ω * m längs zu seinen Schichten bzw. in kleinkörniger Pulverform. In Verbindung mit gutleitenden und temperaturbeständigen Metallen, wie Bronze mit einem spezifischen Widerstand von etwa 0,18 µΩ * m oder Messing mit einem spezifischen Widerstand von etwa 0,036 µΩ * m oder anderen geeigneten Metallen, wie Nickel, Aluminium, Eisen oder Metalllegierungen wird ein als Schleifkontakt für eine Induktionsspulenanordnung geeigneter Verbundwerkstoff genutzt.

Der elektrisch leitfähige Festschmierstoff sollte einen spezifischen Widerstand haben, der sich von Halbleitern und Nichtleitern, d.h. von Isolierstoffen hinreichend unterscheidet. Besonders geeignet sind Festschmierstoffe mit spezifischen Widerständen von weniger als 1 * 10³ µΩ * m.

Verbund-Werkstoffe aus Metall-Graphit, insbesondere Silber-Graphit und Kupfer-Graphit sowie Nickel- und Bronze-Graphit haben den Vorteil, bei einer geringen Reibungszahl im Bereich von weniger als 0,5 einen relativ geringen Verschleiß in der Größenordnung von weniger als 10⁻²mm³ (W * S)⁻¹ aufzuweisen.

Mit solchen Metall-Festschmierstoff-Verbundwerkstoffen als Gleitelement zwischen zwei elektrisch leitend miteinander verbundenen, und relativ zueinander beweglichen Leiterstäben werden der Übergangswiderstand und die mechanische Reibung zwischen den Leiterstäben reduziert. Zudem wird durch den Anteil an Festschmierstoff die Gefahr des Verschweißens der Leiterstäbe aneinander bei den zur induktiven Erwärmung genutzten hohen Strömen reduziert. Durch den zugesetzten Festschmierstoff glättet im Betrieb der Abrieb die Oberfläche des Gleitelementes und trägt zur Verringerung des Übergangswiderstandes bei.

Der Grundwerkstoff kann vorzugsweise einen Anteil an Festschmierstoffe von mindestens 5 Masse-% des Verbundwerkstoffmaterials haben. Besonders vorteilhaft ist es, wenn der Anteil an Festschmierstoff maximal 20 Masse-% und bevorzugt weniger als 10 Masse-% des Werkstoffmaterials beträgt. Damit wird der Anteil des Festschmierstoffs vorteilhaft so weit reduziert, dass der Metallanteil des Verbundwerkstoffs zu einem möglichst geringen spezifischen Widerstand und einer hohen Stromtragfähigkeit beiträgt und dennoch der mechanische Reibungswiderstand durch einen ausreichenden Zusatz an Festschmierstoff sichergestellt wird.

Der Anteil an Metall sollte dann mindestens 80 Masse-% des Verbundwerkstoffmaterials im Verhältnis zum restlichen Festschmierstoff und bevorzugt mehr als 90 Masse-% betragen. Unter dem Metall-Anteil wird der Metall-Werkstoff verstanden, der mit dem Trockenschmierstoff versetzt ist. Eine etwaige Metallkomponente des Trockenschmierstoffs wird bei diesem Metallanteil nicht hinzugerechnet.

Das mit dem Schleifkontakt verbundene Kontaktpaar von Leiterstäben kann mit einem dazwischenliegenden Gleitelement von einem Halterahmen umfasst sein. Der Halterahmen kann ein Federkraftelement haben, das zur Ausübung einer das Kontaktpaar aufeinanderdrückenden und auf das zwischenliegende Gleitelement wirkenden Kontaktkraft ausgebildet ist. Auf diese Weise wird immer eine ausreichende Kraft zwischen den über das Gleitelement miteinander verbundenen Leiterstäben sichergestellt, durch das die Gefahr von Bürstenfeuer bei der Relativbewegung der Leiterstäbe zueinander reduziert wird.

Das Gleitelement ist aber bevorzugt ein separates Element, das nicht mit dem zugeordneten Paar von Leiterstäben verbunden ist. Denkbar ist aber auch, dass das Gleitelement eine Beschichtung eines Leiterstabes ist und damit integral mit dem Leiterstab verbunden ist. Denkbar ist auch, dass die beiden elektrisch leitend miteinander zu kontaktierenden Leiterstäbe jeweils auf ihren einander zugewandten Oberflächen eine Beschichtung aus dem Verbundwerkstoff zur Bildung eines Gleitelementes haben.

Das Federkraftelement kann mindestens eine Spiraldruckfeder aufweisen. Mit Hilfe einer solchen Spiraldruckfeder kann eine Druckkraft zwischen dem Halterahmen und einem relativ beweglich zu dem an dem Halterahmen gelagerten Leiterstab aufgebracht werden.

Das Federkraftelement kann ein Krafteinstellelement haben. Auf diese Weise kann die zwischen den einander zu kontaktierenden Leiterstäben wirkende Kontaktkraft justiert werden. Ein solches Krafteinstellelement kann beispielsweise eine in den Halterahmen eingeschraubte Kontaktkraft-Einstellschraube mit einer Lagerfläche sein. Das Federkraftelement ist dann auf der Lagerfläche aufgelagert.

Der Halterahmen ist aus einem elektrischen Isoliermaterial, wie vorzugsweise aus Phenol-Formaldehyd-Kunstharz (Pertinax) gebildet. Dieses Pertinax hat den Vorteil, bei guter Isolierung besonders stabil, biegesteif und bruchresistent zu sein.

Denkbar ist, dass mindestens zwei Leiterstäbe im Abstand nebeneinander an einer im Halterahmen verschiebbar gelagerten Führungswanne gelagert sind. Dann wirkt jeweils ein Federkraftelement durch die Führungswanne hindurch auf einen zugeordneten Leiterstab. Mit Hilfe der Führungswanne gelingt es, die Leiterstäbe kippsicher und in Querrichtung festzuhalten. Bei einer Vorrichtung zur induktiven Erwärmung ist es zur Reduzierung von Skin-Effekten und Proximity-Effekten erwünscht, dass Leiterstäbe möglichst eng nebeneinander angeordnet sind. Hierdurch erhöht sich die Lorenzkraft zwischen den gegenläufig mit Strom durchflossenen nebeneinander liegenden Leiterstäben, die durch die Führungswanne aufgefangen werden muss. Dabei ist ein ausreichender Isolationsabstand sicherzustellen, auch wenn die Leiterstäbe relativ zueinander verschoben werden. Dies gelingt, wenn nebeneinander angeordnete Leiterstäbe in einer gemeinsamen Führungswanne aufgenommen werden, die ihrerseits in Kontaktrichtung zu den jeweils angrenzenden, zu kontaktierenden Leiterstäben verschiebbar in dem Halterahmen gelagert ist. Dadurch, dass das Federkraftelement nicht auf die Führungswanne, sondern jeweils auf einen in der Führungswanne gehaltenen Leiterstab wirkt, kann für jedes Kontaktpaar von Leiterstäben jeweils mit dem zugeordneten Federkraftelement ein individueller Kontaktdruck sichergestellt werden.

Die Leiterstäbe sind vorzugsweise in Polyetheretherketon (PEEK) gelagert. Dieses Material hat den Vorteil bei sehr guten Gleiteigenschaften zusätzlich noch eine gute elektrische Isolierung aufzuweisen und mechanisch fest und gut bearbeitbar zu sein, um stabile Zwischenstege zwischen nebeneinanderliegenden Leiterstäben ausbilden zu können. Hinzu kommt eine gute Wärmebeständigkeit. Es ermöglicht einen sehr stabilen Aufbau bei dünnen Wandstärken für die zur Aufnahme der Leiterstäbe zu bildenden Aufnahmekontur.

Die Leiterstäbe sind vorzugsweise hohl und mit einem Kühlmedium durchströmbar ausgebildet. Auf diese Weise wird sichergestellt, dass bei dem hohen Stromfluss im Betrieb zur induktiven Erwärmung die Gefahr der Überhitzung und der Verschweißung reduziert wird.

Bei einem Paar von elektrisch leitend miteinander zu kontaktierenden Leiterstäben kann ein Leiterstab als Energieversorgungs-Zuleitung oder Energieversorgungs-Ableitung dienen und hierzu mit Anschlussleitungen verbunden sein. Dieser als Anschlusskontakt dienende Leiterstab hat dann eine im Vergleich zu dem benachbarten Leiterstab des Schleifkontaktpaares erheblich reduzierte Länge. Die Länge dieser Anschlusskontakt-Leiterstäbe ist dann im Wesentlichen auf den mit dem Gleitelement gebildeten Schleifkontakt und den Anschlussbereich für die Anschlussleitung verkürzt. Der Leiterstab kann auf der Seite, die dem Anschlussbereich für die Anschlussleitung gegenüberliegt, ggf. noch etwas über das Gleitelement hinausragen. Dieser über das Gleitelement hinausragende Bereich sollte aber nicht länger als der gegenüberliegende Anschlussbereich für die Anschlussleitung sein.

Die Erfindung wird nachfolgend anhand eines Ausführungsbeispiels mit den beigefügten Zeichnungen näher erläutert. Es zeigen:
- Figur 1: - Draufsicht auf eine skizzierte Vorrichtung zur induktiven Erwärmung mit einer Induktionsspulenanordnung;
- Figur 2: - Querschnittsansicht der Vorrichtung aus Figur 1;
- Figur 3: - Querschnittsansicht eines Halterahmens mit darin eingebauten Leiterstäben;
- Figur 4: - Querschnittsansicht einer zweiten Einführungsform eines Halterahmens mit daran eingebauten Leiterstäben.

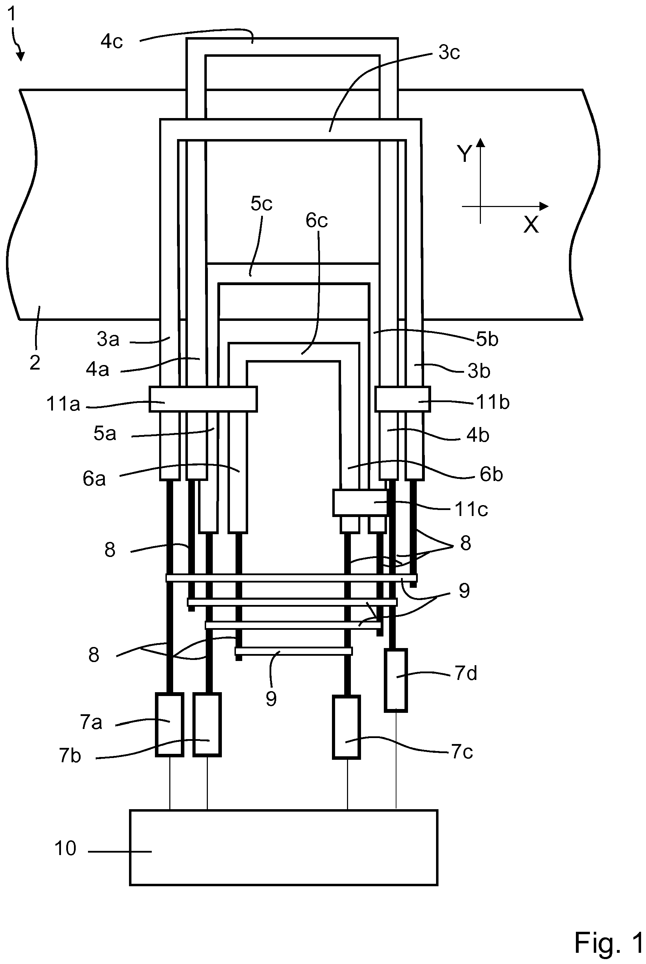

Figur 1 zeigt eine Draufsicht auf eine Skizze einer Vorrichtung 1 zur induktiven Erwärmung eines Objektes 2. Ein solches Objekt 2 kann beispielsweise ein Flachmaterial wie z.B. ein Blechband sein, das mit einer Querfelderwärmungsanlage aufgeheizt wird.

Eine vergleichbare Vorrichtung kann aber auch für andere Zwecke der induktiven Erwärmung, wie beispielsweise zum Härten von Objekten genutzt werden.

Die Vorrichtung 1 hat eine Induktionsspulenanordnung, die eine Anzahl von relativ zueinander beweglich angeordneten Leiterstäben 3a, 3b, 4a, 4b, 5a, 5b, 6a, 6b, hat. Zwei Leiterstäbe 3a, 3b; 4a, 4b; 5a, 5b und 6a, 6b sind jeweils an einem Ende mit einem Kopfsteg 3c, 4c, 5c, 6c miteinander verbunden und bilden eine U-förmig gebogene Leiterschleife bzw. Spulenschleife aus. Die Kopfstege 3c, 4c, 5c, 6c bilden den Spulenkopf.

Zur Linearverschiebung ist jeweils eine U-förmige Leiterschleife, die aus einem Paar von Leiterstäben 3a, 3b; 4a, 4b; 5a, 5b und 6a, 6b und einem Kopfsteg 3c, 4c, 5c, 6c gebildet ist, an einen Aktor 7a, 7b, 7c und 7d beispielsweise mit einem Spindeltrieb 8 gekoppelt. Hierbei kann ein Aktor 7a, 7b, 7c, 7d über einen Riemen 9 ein Paar von Spindeltrieben 8 synchron ansteuern, wenn dieses Paar von Spindeltrieben 8 über den Riemen 9 gekoppelt ist. Die Spindeltriebe 8 sind jeweils mit einem Leiterstab 3a, 3b, 4a, 4b, 5a, 5b, 6a, 6b gekoppelt. Denkbar ist auch, dass mehrere Leiterstäbe 3a, 3b, 4a, 4b, 5a, 5b, 6a, 6b zusammen mit einem Aktor 7a, 7b, 7c, 7d über einen gemeinsamen Spindeltrieb 8 angesteuert werden, der mit einem der Leiterstäbe 3a, 3b, 4a, 4b, 5a, 5b, 6a, 6b verbunden ist. Die anderen Leiterstäbe 3a, 3b, 4a, 4b, 5a, 5b, 6a, 6b werden dann mitbewegt und sind hierzu mechanisch mit dem angetriebenen Leiterstab 3a, 3b, 4a, 4b, 5a, 5b, 6a, 6b verbunden und auf einer Achse geführt. Zur Ansteuerung der einzelnen Aktoren 7a, 7b, 7c, 7d sind diese mit einer Steuerungseinheit 10 verbunden.

Mindestens ein Paar von Leiterstäbe 3a, 4a, 5a, 6a; 5b, 6b und 3b, 4b sind jeweils über einen Halterahmen 11a, 11b, 11c miteinander verkoppelt. Der Halterahmen 11a, 11b, 11c umfasst dabei die zugehörigen Leiterstäbe 3a, 4a, 5a, 6a, 3b, 4b, 5b, 6b und ist so ausgebildet, dass ein elektrisch leitender Schleifkontakt zwischen zwei zugeordneten Leiterstäben 4a, 5a; 3b, 4b und 5b, 6b sichergestellt ist.

Bei einer Relativverschiebung der Leiterstäbe 3a, 4a, 5a, 6a, 3b, 4b, 5b, 6b in Querrichtung, d.h. quer zur Bandvorschubrichtung wird durch den jeweiligen Schleifkontakt zwischen zwei elektrisch leitend miteinander verbundenen Leiterstäben eine Stromübertragung zur Bildung einer Induktionsspule sichergestellt.

Hierzu ist zwischen einem Paar von Leiterstäben ein Schleifkontakt mit einem Gleitelement 12 gebildet, das zwischen dem Paar einander zu kontaktierender Leiterstäbe angeordnet ist. Dieses Gleitelement 12 ist aus einem Verbundwerkstoff aus Metall und einem elektrisch leitfähigen Festschmierstoff gebildet.

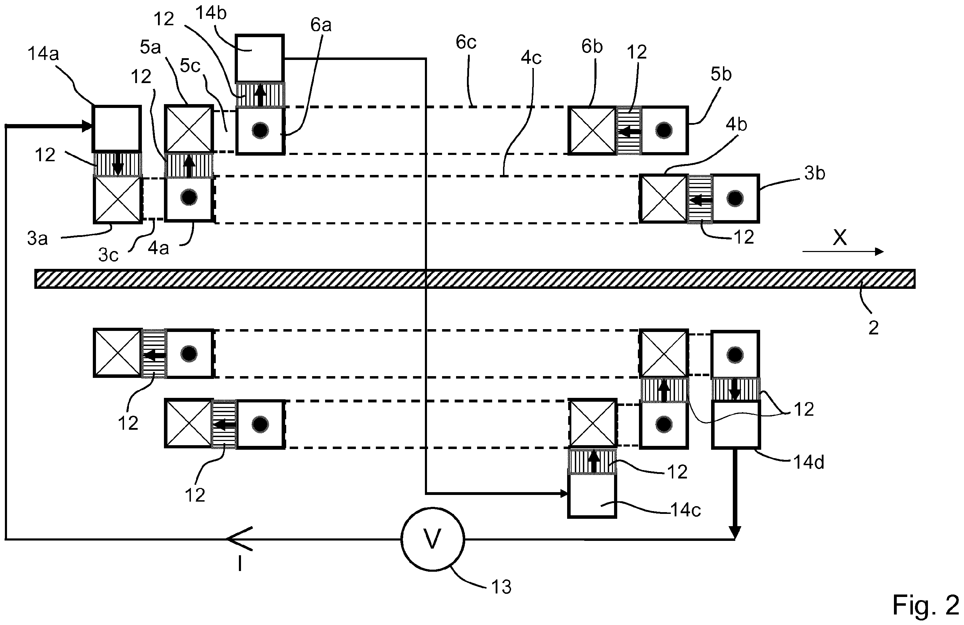

Figur 2 zeigt eine Querschnittsansicht der Vorrichtung 1 aus Figur 1. Dort ist erkennbar, dass zwischen jeweils einem Paar von Leiterstäben ein Gleitelement 12 angeordnet ist. Dieses Gleitelement 12 ist vorzugsweise ein von den jeweiligen Leiterstäben 3a bis 6a; 3b bis 6b separates Teil, das ortsfest gelagert ist, wobei sich eines der zugehörigen Leiterstäbe 3a bis 6a; 3b bis 6b relativ hierzu bewegt.

Denkbar ist aber auch, dass das Gleitelement als Beschichtung mindestens einer der Leiterstäbe ausgebildet ist.

Durch die Ausbildung des Gleitelementes 12 aus einem Verbundwerkstoff aus Metall und einem elektrisch leitfähigen Festschmierstoff kann ein flächiges Auflager der eng nebeneinanderliegenden Leiterstäbe 3a bis 6a; 3b bis 6b bereitgestellt werden. Der Festschmierstoff stellt hinreichende Gleiteigenschaften zur Verfügung und verhindert im Verhältnis zu ölgetränkten Gleitelementen eine Verschmutzung des zu behandelnden Objektes. Durch die elektrische Leitfähigkeit nicht nur des Metallanteils des Verbundwerkstoffes, sondern auch des Festschmierstoffes wird ein geringer Übergangswiderstand sichergestellt. Durch die Beimischung von elektrisch leitfähigem Festschmierstoff zu dem metallischen Werkstoff des Gleitelementes wird zudem eine hinreichende Wärmeleitfähigkeit sichergestellt und die Gefahr des Verschweißens der Leiterstäbe bei der Kontaktierung und dem hohen Stromfluss im Bereich von etwa 4 bis 6 kA verhindert.

Durch den Abrieb des Festschmierstoffes bei der Hin- und Herbewegung der Leiterstäbe 3a bis 6a; 3b bis 6b wird eine sehr glatte Oberfläche erreicht, wodurch der Übergangswiderstand weiter verringert wird.

Bevorzugt eignet sich Graphit als elektrisch leitender Festschmierstoff, der einem Metall oder einer Metalllegierung, wie bspw. Kupfer zugesetzt wird, um den Verbundwerkstoff zu bilden. So sollte der Anteil an Festschmierstoff und insbesondere an Graphit im Bereich von 5 Masse-% bis 20 Masse-% liegen. Als sehr geeignet hat sich ein Verbundwerkstoff aus Bronze-Graphit oder Kupfer-Graphit erwiesen, der bei geringen spezifischen elektrischen Widerständen für Bronze-Graphit im Bereich von etwa 0,1 µΩ * m und für Kupfer-Graphit im Bereich von etwa 0,05 µΩ * m (± 0,02 µΩ * m) einen überaus geringen Übergangswiderstand bereitstellt. Die Rohdichte dieses Materials liegt etwa im Bereich von 5,3 g/cm³ bis 5,9 g/cm³ und weist eine relativ hohe Rockwellhärte im Bereich von etwa 75 bis 100 sowie eine große Biegefestigkeit im Bereich von etwa 40 bis 90 N/mm² auf.

Durch den hohen Metallgehalt vorzugsweise im Bereich von etwa 89 bis 90 Masse-% kann das Gleitelement sehr robust und gut leitend sein und dabei immer noch eine ausreichende Schmiereigenschaft zur Bildung eines sehr gut leitfähigen Schleifkontaktes haben.

Geeignet sind bspw. die Verbundwerkstoffe B20, B14Z1, C20 und A11 der Firma Schunk Kohlenstofftechnik GmbH.

Das Gleitelement ist vorzugsweise ein separates Bauteil, das durch eine Halterung zwischen den Leiterstäben gehalten wird. Die Leiterstäbe werden dabei konstant mit einer bestimmten Kraft zusammengedrückt.

Das Verbundmaterial mit Metall und Festschmierstoff und insbesondere aus Metall-Graphit vereint die Eigenschaften der guten elektrischen Leitfähigkeit, guten Wärmeleitfähigkeit und herausragenden Gleiteigenschaft auf idealer Weise. Durch die gute elektrische Leitfähigkeit werden dielektrische Verluste und damit auch die thermische Erwärmung reduziert. Durch die gute Wärmeleitfähigkeit kann die entstehende Verlustenergie hervorragend abgeführt werden. Dies wird im Wesentlichen durch den Metallanteil des Verbundwerkstoffes beeinflusst. Durch den Festschmierstoff-Anteil wird ein geringer Reibkoeffizient sichergestellt.

Die Stromtragfähigkeit der Gleitelemente ist von mehreren Faktoren, wie dem spezifischen elektrischen Widerstand, der Härte, der mechanischen Belastung, der Einschleifzeit, der Wassertemperatur etc. abhängig. Die Materialien des Verbundwerkstoffes sollten dann optimal aufeinander abgestimmt werden.

Gleitelemente, die hauptsächlich aus Graphit gebildet werden, wie bspw. CG1598 und CG1715, können sich bei hoher Strombelastung aufgrund des erhöhten elektrischen Widerstands von Graphit stark erwärmen. Ein Problem ist dabei noch, dass sich Graphit unter Normaldruck bei ca. 600°C zersetzt. Daher ist es vorteilhaft, wenn der Anteil an Festschmierstoff und insbesondere an Graphit als Festschmierstoff in einem Bereich von etwa 5 bis 20 und bevorzugt etwa 10 Masse-% ± 2 Masse-% gehalten wird.

Durch die reduzierte Graphitkonzentration wird der Übergangswiderstand nicht negativ beeinflusst, was zu einer Verringerung der Betriebstemperatur durch Erwärmung bei Stromfluss führt. In diesem Bereich wird die Reibzahl aber immer noch ausreichend reduziert und ein Verschweißen der Kontaktpartner wird sicher verhindert.

Aus der Figur 2 ist weiterhin erkennbar, dass der Stromfluss aus einer Spannungsquelle 13 über einen Anschlusskontakt-Leiterstab 14a dem Leiterstab 3a zugeführt und darüber über einen Kopfsteg 3c zum gegenüberliegenden Leiterstab 3b geführt wird. Von dort wird der Strom über ein Gleitelement 12 zum angrenzenden Leiterstab 4b geführt. Über diesen Leiterstab 4b gelangt der Strom dann über den Kopfsteg 4c zum Leiterstab 4a dieser Leiterschleife. Von dem Leiterstab 4a wird der Strom dann über ein Gleitelement 12 zum darüber liegenden Leiterstab 5a geführt. In dieser Leiterschleife gelangt der Strom dann über den Kopfsteg 5c zum gegenüberliegenden Leiterstab 5b, um dann über ein Gleitelement 12 zum angrenzenden Leiterstab 6b geführt zu werden. Der Strom wird dann über den Kopfsteg 6c zum gegenüberliegenden Leiterstab 6a geführt, um dann über ein Gleitelement 12 und einen Anschlusskontakt-Leiterstab 14b zu der darunter liegenden Induktionsspulenanordnung geführt zu werden.

Dort wird der Strom dann über diese Induktionsspulenanordnung wiederum unter Verwendung von Gleitelementen 12 und eines weiteren Anschlusskontakt-Leiterstabes 14d zur Spannungsquelle 13 zurückgeführt.

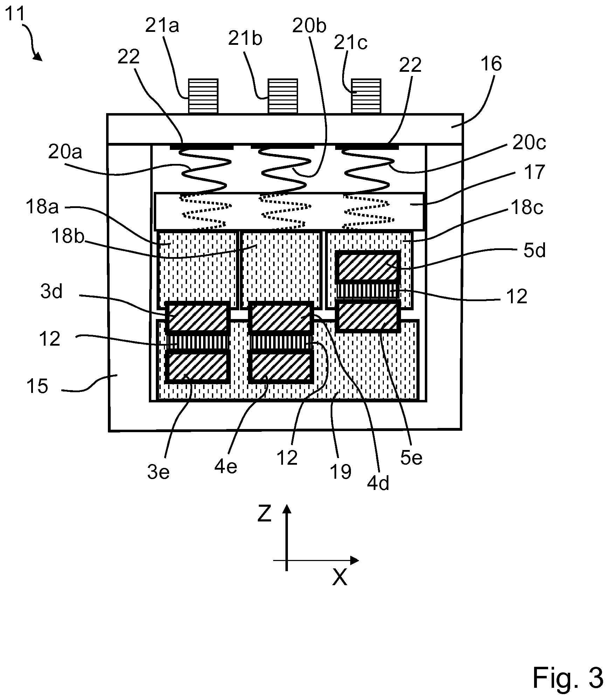

Figur 3 zeigt eine Querschnittsansicht durch einen Halterahmen 11, der aus einem U-förmigen Käfig 15 und einer diesen abschließenden Deckelplatte 16 gebildet ist. Der Käfig 15 und die Deckelplatte 16 sind aus einem Isolierstoffmaterial und bspw. aus Phenol-Formaldehyd-Kunstharz (Pertinax) gebildet. Sie können form- und/oder stoffschlüssig miteinander verbunden sein. Geeignet ist eine Verschraubung der beiden Elemente.

In dem Käfig 15 ist eine Führungswanne 17 in Z-Richtung höhenverschiebbar gelagert. Die Führungswanne 17 steht in formschlüssigem Eingriff mit Lagerelementen 18, die bspw. aus einem Isolierstoff wie Polyetheretherketon PEEK gebildet sein können. Diese Lagerelemente 18 haben eine Kontur zur Aufnahme jeweils eines Leiterstabes. Dabei können mehrere Leiterstäbe 3d, 4d auf einer Höhe nebeneinander und z.B. ein weiterer Leiterstab 5d höhenversetzt angeordnet sein.

In dem Käfig 15 ist ein weiteres Isolierstück 19 eingebaut, in dem die jeweils unteren Leiterstäbe 3e, 4e, 5e aufgenommen sind. Die unteren Leiterstäbe 3e, 4e, 5e sind ebenfalls beweglich in dem gemeinsamen Isolierstoffteil 19 gelagert.

Erkennbar ist, dass die oberen Leiterstäbe 3d, 4d, 5d durch ein Federkraftelement 20a, 20b, 20c beaufschlagt sind. Die Federkraftelemente 20a, 20b, 20c sind dabei, wie durch die gepunktete Linie angedeutet, durch die Führungswanne 17 auf das zugehörige Lagerelement 18a, 18b, 18c geführt, um eine Druckkraft auf jeweils eines dieser elektrisch isolierenden Lagerelemente 18a, 18b, 18c auszuüben. Der Leiterstab 3d, 4d, 5d ist dabei mit einem dieser Lagerelemente 18a, 18b, 18c gekoppelt, um dann auf diese Weise mit Hilfe des Federkraftelementes 20a, 20b, 20c auf den jeweils darunter liegenden Leiterstab 3e, 4e, 5e gedrückt zu werden.

Erkennbar ist weiterhin, dass zwischen jeweils einem Paar von Leiterstäben 3d, 3e bzw. 4d, 4e und 5d, 5e ein separates Gleitelement 12 angeordnet ist.

Erkennbar ist weiterhin, dass die Federkraftelemente 20a bis 20c jeweils mit einem Krafteinstellelement 21a, 21b, 21c gekoppelt sind. Das Krafteinstellelement 21a-21c hat eine in das Deckelteil 16 eingeschraubte Kontaktkraft-Einstellschraube mit einer Lagerfläche 22, auf welche das Federkraftelement 20a, 20b, 20c jeweils auflagert. Durch Einschrauben der Kontaktkraft-Einstellschraube in Richtung zugeordnetem Leiterstab 3d, 4d, 5d wird die auf diesen Leiterstab 3d, 4d, 5d wirkende Druckkraft verstärkt.

Mit dem in dem Halterahmen 11 gelagerten Gleitelement 12 bspw. aus einem Metall-Graphit-Verbundwerkstoff kann ein hoher Strom mit geringen Verlusten bei relativer Bewegung der Kontaktpartner zueinander übertragen werden. Der Kontaktwerkstoff ist durch den hohen Metallgehalt dabei sehr gut kühlbar.

Die bspw. hohlen und wassergekühlten Leiterstäbe werden über das dazwischen liegende Gleitelement 12 elektrisch verbunden und sind unabhängig voneinander translatorisch bewegbar. Jeweils ein Paar von Leiterstäben werden zusammengedrückt, sodass eine Kontaktkraft auf das dazwischen liegende Gleitelement 12 erzeugt wird. Je höher diese Kraft ist, desto besser sind der elektrische Kontaktwiderstand und der Wärmeübergang und umso höher ist die maximale Stromübertragung.

Die Induktorspulenanordnung kann auf diese Weise unter Last bei Stromfluss verstellt werden. Damit kann während der induktiven Erwärmung das auf das zu erwärmende Objekt 2 wirkende elektrische Feld verstellt werden, dies ist bspw. in Verbindung mit einer geeigneten Steuereinheit 10 zur Banderwärmung vorteilhaft. Die Vorrichtung eignet sich aber auch zum Härten oder ähnlichem.

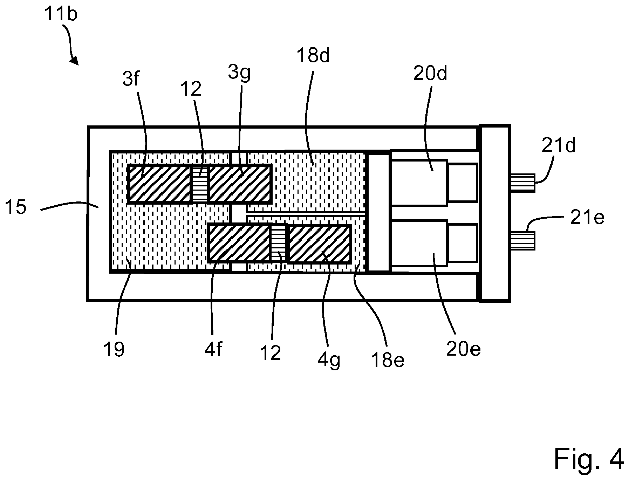

Figur 4 lässt eine andere Ausführungsform eines Halterahmens 11b erkennen, bei dem zwei nebeneinanderliegende Leiterstäbe 3f, 3g bzw. 4f, 4g über ein zwischenliegendes Gleitelement 12 elektrisch leitend miteinander kontaktiert werden. Hierbei ist wiederum das in der Darstellung linke Leitersegment 3f, 4f in einem Isolierstoffteil 19 aus PEEK gelagert. Das jeweils rechte Leitersegment 3g, 4g ist hingegen in einem beweglich in dem Halterahmen 11 geführten Isolierstoffteil 18d, 18e gelagert, das von einer Führungswanne 17 gehalten ist. Wiederum ist die Führungswanne 17 verschiebbar in dem Käfig 15 des Halteelementes 11b angeordnet. Ein Federkraftelement 20d, 20e wirkt jeweils auf eines der Isolierstoffelemente 18d, 18e. Dabei kann es sich um eine gekapselte Spiraldruckfeder handeln, die mit einem Krafteinstellelement 21d, 21e gekoppelt ist. Diesbezüglich wird auf die Ausführungsform in Figur 3 verwiesen.

## Patentansprüche

1. Vorrichtung (1) zur induktiven Erwärmung mit einer Induktionsspulenanordnung, die relativ zueinander bewegbare Leiterstäbe (14a-3a; 3b-4b; 4a-5a; 5b-6b; 6a-14b; 14c; 14d; 3e-3d; 4d-4e; 5d-5e; 14d) hat, **dadurch gekennzeichnet, dass** zwischen zwei Leiterstäben (14a-3a; 3b-4b; 4a-5a; 5b-6b; 6a-14b; 14c; 14d; 3e-3d; 4d-4e; 5d-5e; 14d) ein Schleifkontakt mit einem Gleitelement (12) angeordnet ist, das aus einem Verbundwerkstoff aus Metall und einem elektrisch leitfähigem Festschmierstoff gebildet ist.

2. Vorrichtung (1) nach Anspruch 1, **dadurch gekennzeichnet, dass** der Festschmierstoff aus der Gruppe Graphit, Molybdenum-diselenide (MoSe₂), Niobium-diselenide (NbSe₂), Wolfram-diselenide (WSe₂), Molybdän(IV)-sulfid (MoS₂) oder Wolfram(IV)-sulfid (WS₂) ausgewählt ist.

3. Vorrichtung (1) nach Anspruch 1 oder 2, **dadurch gekennzeichnet, dass** der Verbundwerkstoff einen spezifischen elektrischen Widerstand von kleiner als 1 µOhm * m und bevorzugt kleiner als 0,2 µOhm * m hat.

4. Vorrichtung (1) nach einem der Ansprüche 1 bis 3, **dadurch gekennzeichnet, dass** der Verbundwerkstoff einen Anteil an Festschmierstoff von mindestens 5 Masse-Prozent des Verbundwerkstoffmaterials hat.

5. Vorrichtung (1) nach Anspruch 4, **dadurch gekennzeichnet, dass** der Verbundwerkstoff einen Anteil an Festschmierstoff von maximal 20 Masse-Prozent des Verbundwerkstoffmaterials hat.

6. Vorrichtung (1) nach Anspruch 4, **dadurch gekennzeichnet, dass** der Verbundwerkstoff einen Anteil an Metall von mindestens 80 Masse-Prozent des Verbundwerkstoffmaterials im Verhältnis zum restlichen Festschmierstoff hat.

7. Vorrichtung (1) nach einem der Ansprüche 1 bis 6, **dadurch gekennzeichnet, dass** das mit dem Schleifkontakt verbundene Kontaktpaar von Leiterstäben (14a-3a; 3b-4b; 4a-5a; 5b-6b; 6a-14b; 14c; 14d; 3e-3d; 4d-4e; 5d-5e; 14d) mit dem dazwischenliegenden Gleitelement (12) von einem Halterahmen (11, 11a, 11b, 11c) umfasst ist, wobei der Halterahmen (11, 11a, 11b, 11c) ein Federkraftelement (20a - 20e) hat, das zur Ausübung einer das Kontaktpaar aufeinander drückenden und auf das zwischenliegende Gleitelement (12) wirkenden Kontaktkraft ausgebildet ist.

8. Vorrichtung (1) nach Anspruch 7, **dadurch gekennzeichnet, dass** das Feder kraftelement (20a - 20e) mindestens eine Spiraldruckfeder hat.

9. Vorrichtung (1) nach Anspruch 7 oder 8, **dadurch gekennzeichnet, dass** das Federkraftelement (20a - 20e) ein Krafteinstellelement (21a - 21e) hat.

10. Vorrichtung (1) nach Anspruch 9, **dadurch gekennzeichnet, dass** das Krafteinstellelement (21a - 21e) eine in den Halterahmen (11, 11a, 11b, 11c) eingeschraubte Kontaktkraft-Einstellschraube mit einer Lagerfläche (22) ist, wobei das Federkraftelement (20a - 20e) auf der Lagerfläche (22) aufgelagert ist.

11. Vorrichtung (1) nach einem der Ansprüche 7 bis 10, **dadurch gekennzeichnet, dass** der Halterahmen (11, 11a, 11b, 11c) aus Phenol-Formaldehyd-Kunstharz (Pertinax) gebildet ist.

12. Vorrichtung (1) nach einem der vorhergehenden Ansprüche 7 bis 11, **dadurch gekennzeichnet, dass** mindestens zwei Leiterstäbe (3d, 4d, 5d; 3g, 4g) im Abstand nebeneinander an einer im Halterahmen (11, 11a, 11b, 11c) verschiebbar gelagerten Führungswanne (17) gelagert sind und jeweils ein Federkraftelement (21a - 21e) durch die Führungswanne (17) hindurch auf einen zugeordneten Leiterstab (3d, 4d, 5d; 3g, 4g) wirkt.

13. Vorrichtung (1) nach einem der vorhergehenden Ansprüche, **dadurch gekennzeichnet, dass** die Leiterstäbe (3a, 3b, 3d-3g; 4a, 4b, 4d-4g; 5a, 5b, 5d-5e; 6a, 6b, 14a-14d) in Polyetheretherketon (PEEK) gelagert sind.

14. Vorrichtung (1) nach einem der vorhergehenden Ansprüche, **dadurch gekennzeichnet, dass** die Leiterstäbe (3a-3g, 4a-4g; 5a-5e; 6a-6c; 14a-14d) hohl und mit einem Kühlmedium durchströmbar ausgebildet sind.

15. Vorrichtung (1) nach einem der vorhergehenden Ansprüche, **dadurch gekennzeichnet, dass** Leiterstäbe (14a-14d) als Energieversorgungs-Zuleitungen oder -Ableitungen mit Anschlussleitungen verbunden sind, wobei die Länge dieser Anschlusskontakt-Leiterstäbe (14a-14d) im Vergleich zu den benachbartem Leiterstab (4a, 6a) des Schleifkontaktpaares im Wesentlichen auf den mit dem Gleitelement (12) gebildeten Schleifkontakt und den Anschlussbereich für die Anschlussleitung verkürzt ist.
